# DEMANDE DE BREVET EUROPEEN

(11) **EP 0 991 302 A1**
(43) Date de publication de la demande: **05.04.2000**
(21) Numéro de dépôt: 99402368.7
(22) Date de dépôt: 28.09.1999
(51) Int. Cl.: H05B 6/02, C21D 9/00, B21B 45/00, C21D 1/42

(54) **Installation pour le chauffage de produits métallurgiques comportant des dispositifs par induction, positionnés en quinconce**

(30) Priorité: 30.09.1998 FR 9812253
(71) Demandeur: Celes, F-68610 Lautenbach (FR)
(72) Inventeur: Couffet, Claude, 93100 Montreuil (FR); Hellegouarc'h, Jean, 94170 Le Perreux/Marne (FR); Prost, Gérard, 94260 Fresnes (FR); Uring, Jean Camille, 68000 Colmar (FR)
(74) Mandataire: Armengaud Ainé, Alain

(57) **Abrégé**

Installation pour le chauffage de produits sidérurgiques comportant des dispositifs de chauffage par induction (1, 2), chacun des dispositifs étant composé de modules formés de surfaces inductrices supérieures et inférieures, les surfaces inductrices étant séparées par un espace formant l'entrefer dans lequel circule le produit à échauffer ou à réchauffer au défilé, celui-ci reposant sur une table (3, 4) à rouleaux (5) et cheminant au-dessus d'au moins un ski (6) positionné selon une direction parallèle au sens de déplacement du produit, caractérisée en ce qu'on positionne en quinconce au moins une paire de modules dans l'espace (7) resté libre entre les rouleaux (5) voisins des modules.

## Description

La présente invention est relative à un dispositif destiné à une installation pour le chauffage au défilé de rives de produits métallurgiques, devant subir ultérieurement des déformations à chaud. Ces produits sont notamment des blooms, des billettes ou des brames, qui doivent être chauffés ou réchauffés avant d être aplatis et/ou élargis par passage entre les rouleaux d'un laminoir.

Ces produits sont chauffés ou réchauffés à l'aide d'une installation comportant des dispositifs de chauffage par induction qui forment des modules et dont chacun des entrefers est disposé de part et d'autre du produit circulant.

On sait par ailleurs que pour obtenir un rendement optimal de chauffage et donc de pénétration des courants induits au sein de la matière, il convient d'imposer le recouvrement de surfaces inductrices de chacune des bobines par rapport à la face du produit selon une valeur typiquement voisine de 75%, les 25% complémentaires correspondant à la surface inductrice dans laquelle il n'y a pas de produit, 75% correspondant donc en fait à la partie complémentaire faisant face au produit.

En outre, il est classique de trouver sur une installation de chauffage par induction, en amont et en aval des dispositifs de chauffage par induction proprement dits, des rouleaux sur lesquels circule le produit à réchauffer. Plus particulièrement, dans cette même zone de réchauffage, entre chaque portion de table à rouleaux, il est connu de disposer des moyens de guidage du produit dans une direction sensiblement parallèle à son sens de déplacement, qui évitent au produit de plonger en dessous du plan de circulation, ces moyens de guidage étant communément appelés skis.

En raison de leur positionnement relatif par rapport au sens de circulation du produit à traiter, ces skis limitent la pénétration transversale, vers l'axe médian de la table, des dispositifs de chauffage par induction, ceux-ci venant buter mécaniquement dans les skis. En conséquence, il est impossible de modifier plus avant vers l'axe médian, la position transversale des inducteurs.

Plus spécialement, cette situation est particulièrement critique dans le cas d'une modification des dimensions standard du produit circulant au défilé, notamment lors d'une diminution de la largeur du produit, le respect du positionnement optimal des entrefers par rapport à la zone de produit à réchauffer n'est plus possible.

La présente invention vise donc à pallier les inconvénients des installations précédentes en proposant un dispositif pour installation de chauffage par induction qui puisse fonctionner de manière optimale avec des produits de largeur réduite, ces produits circulant au défilé entre les inducteurs.

A cet effet, l'installation pour le chauffage de produits sidérurgiques, objet de l'invention, comportant des dispositifs de chauffage par induction, chacun des dispositifs étant composé de modules formés de surfaces inductrices supérieures et inférieures, les surfaces inductrices étant séparées par un espace formant l'entrefer dans lequel circule le produit à échauffer ou à réchauffer au défilé, celui-ci reposant sur une table à rouleaux et cheminant au-dessus d'au moins un ski positionné selon une direction parallèle au sens de déplacement du produit, se caractérise en ce qu'on positionne en quinconce au moins une paire de modules dans l'espace resté libre entre les rouleaux voisins des modules.

Selon un autre aspect de l'invention, l'installation pour le chauffage de produits sidérurgiques comportant des dispositifs de chauffage par induction, chacun des dispositifs étant composé de modules formés de surfaces inductrices supérieures et inférieures, les surfaces inductrices étant séparées par un espace formant l'entrefer dans lequel circule le produit à échauffer ou à réchauffer au défilé, celui-ci reposant sur une table à rouleaux et sur au moins un ski positionné selon une direction parallèle au sens de déplacement du produit, se caractérise en ce qu'on escamote au moins un ski en dessous du plan de circulation du produit sidérurgique dans l'espace de manière à pouvoir rapprocher l'un vers l'autre les dispositifs de chauffage par induction.

D'autres caractéristiques et avantages de la présente invention ressortiront de la description faite ci-après, en référence aux dessins annexés qui en illustrent un exemple de réalisation dépourvu de tout caractère limitatif. Sur les figures :
- la figure 1 est une vue de dessus d'une installation de chauffage par induction de produits sidérurgiques, selon l'art antérieur ;
- la figure 2 est une vue de dessus d'une installation de chauffage par induction de produits sidérurgiques, selon l'invention.

Selon un mode préféré de réalisation de l'installation objet de l'invention, cette installation comporte une pluralité de dispositifs de chauffage par induction 1, 2, notamment en aval d'un premier tronçon 3 de table à rouleaux, ou plus généralement en aval d'une enceinte de traitement, et en amont d'un second tronçon 4 de table à rouleaux 5 ou d'une seconde enceinte de traitement.

Chacun de ces dispositifs de chauffage par induction 1, 2 est composé d'un module formé de surfaces inductrices supérieures et inférieures, les surfaces inductrices étant séparées par un espace formant l'entrefer dans lequel circule le produit à échauffer ou à réchauffer au défilé.

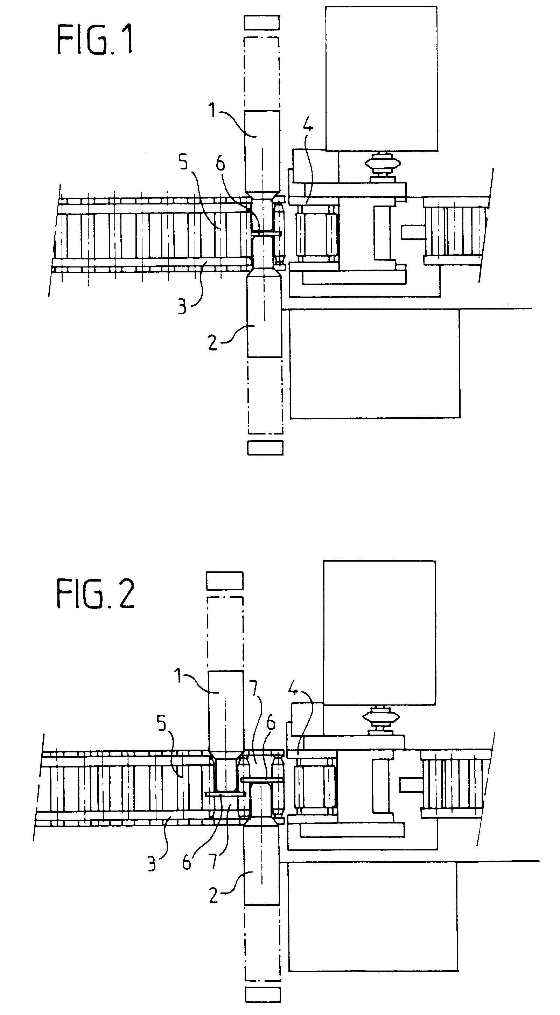

Les modules ainsi formés sont positionnés dans une installation classique, connue de l'art antérieur (cf. figure 1), de part et d'autre de l'axe médian longitudinal du chemin de roulement des produits à traiter, les modules étant de plus placés face à face et simplement séparés par le moyen de guidage 6 ou ski. L'encombrement et Les dimensions des dispositifs de chauffage par induction 1, 2 et leur position relative par rapport aux skis 6 constituent une limite au réchauffage des rives des produits.

Dans des installations destinées à traiter des produits de moindre largeur, et dans lesquelles on souhaite utiliser les dispositifs de chauffage par induction 1, 2 existants, une première solution consiste à positionner en quinconce au moins une paire de modules (cf. figure 2), dans l'espace resté libre 7 entre les rouleaux 6 voisins des modules.

Dans cette configuration, il est possible pour chacune des rives de positionner respectivement la zone de recouvrement de chacune des surfaces inductrices des dispositifs de chauffage par induction 1, 2, dans une situation optimale à l'égard de la fraction de surface de produit en regard de cette surface de recouvrement.

De plus, dans cette configuration en quinconce des modules, l'espace dégagé par le déplacement latéral de l'un des modules, est utilisé pour positionner un ski 6 devant l'autre module.

Une deuxième solution consiste à ne pas déplacer latéralement l'un par rapport à l'autre, les dispositifs de chauffage par induction 1, 2, ceux-ci restant en regard l'un de l'autre, mais à escamoter au moins un ski 6, sous le plan de déplacement du produit en circulation, ce ski 6 étant initialement dans le plan médian séparant lesdits modules.

Néanmoins, cette solution offre des degrés de liberté de réglage moindres par rapport à la première solution. En effet, l'épaisseur ou la largeur du ski qui est escamoté, correspond en fait à la largeur qui peut être utilisée pour rapprocher l'un vers l'autre les modules. Cette largeur de ski est un paramètre de réglage qui ne peut être mis à profit que lorsque l'on procède à des modifications réduites dans la largeur du produit en circulation.

Dans le cas d'une modification substantielle dans la largeur du produit devant être chauffé par un dispositif de chauffage par induction - cette modification étant dans ce cas supérieure à la largeur d'un ski escamoté - la première solution (positionnement en quinconce des surfaces inductrices) sera préférée.

De plus, si cette installation de chauffage par induction, à ski escamoté ou à positionnement en quinconce des surfaces inductrices, comporte des dispositifs de chauffage par induction à forte puissance injectée (de l'ordre de 400 à 800 kW), on adapte au voisinage de ceux-ci, des rouleaux comportant des moyens permettant d'empêcher l'établissement de courant de circulation (suppression des arcs électriques d'extra-rupture). Ces rouleaux font l'objet d'une demande de brevet déposée par la Société demanderesse le même jour.

Il demeure bien entendu que la présente invention n'est pas limitée aux exemples de réalisation décrits et représentés ci-dessus, mais qu'elle en englobe toutes les variantes.

## Revendications

1. Installation pour le chauffage de produits sidérurgiques comportant des dispositifs de chauffage par induction (1, 2), chacun des dispositifs étant composé de modules formés de surfaces inductrices supérieures et inférieures, les surfaces inductrices étant séparées par un espace formant l'entrefer dans lequel circule le produit à échauffer ou à réchauffer au défilé, celui-ci reposant sur une table (3, 4) à rouleaux (5) et cheminant au-dessus d'au moins un ski (6) positionné selon une direction parallèle au sens de déplacement du produit, caractérisée en ce qu'on positionne en quinconce au moins une paire de modules dans l'espace (7) resté libre entre les rouleaux (5) voisins des modules.

2. Installation pour le chauffage de produits sidérurgiques comportant des dispositifs de chauffage par induction (1, 2) chacun des dispositifs étant composé de modules formés de surfaces inductrices supérieures et inférieures, les surfaces inductrices étant séparées par un espace formant l'entrefer dans lequel circule le produit à échauffer ou à réchauffer au défilé, celui-ci reposant sur une table (3, 4) à rouleaux (5) et sur au moins un ski (6) positionné selon une direction parallèle au sens de déplacement du produit, caractérisée en ce qu'on escamote au moins un ski (6) en dessous du plan de circulation du produit sidérurgique de manière à pouvoir rapprocher l'un vers l'autre les dispositifs de chauffage par induction (1, 2).

3. Installation pour le chauffage par induction de produits sidérurgiques selon l'une des revendications 1 ou 2, caractérisée en ce qu'elle comporte des rouleaux (5) pourvus de moyens permettant d'empêcher l'établissement de courant de circulation.

4. Installation pour le chauffage par induction de produits sidérurgiques selon l'une des revendications 1 ou 3, caractérisée en ce qu'on positionne un ski (6) dans l'espace (7) dégagé par le déplacement latéral de l'un des modules.
